# EUROPEAN PATENT APPLICATION

(11) **EP 4 465 109 A1**
(43) Date of publication of application: **20.11.2024**
(21) Application number: 23174381.6
(22) Date of filing: 19.05.2023
(51) Int. Cl.: G02B 21/02, G02B 21/36

(54) **AN OPTICAL ASSEMBLY, A MICROSCOPE, AND A METHOD OF IMAGING A SAMPLE**

(71) Applicant: Cui, Jian, 80796 Munich (DE)
(72) Inventor: Cui, Jian, 80796 Munich (DE); Ma, Ruyu, 85748 Garching bei München (DE)
(74) Representative: Hepp Wenger Ryffel AG

(57) **Abstract**

The invention relates to an optical assembly (1) for use in an imaging system, preferably a microscope (30). The optical assembly comprises a first lens assembly (2) and a second lens assembly (3). The first lens assembly (2) is adapted for collecting light of a sample (S) and the second lens assembly (3) is adapted for forming an image (I). The first lens assembly (2) and the second lens assembly (3) define an optical axis (OA). The first lens assembly (2) is infinity corrected, such that light collected from a sample (S) is formed into a parallel beam (5) exiting the first lens assembly (2). The second lens assembly (3) is arranged with respect to the first lens assembly (2) such that the parallel beam (5) enters the second lens assembly (3). The optical assembly (1) further comprises a telescopic lens assembly (10). The telescopic lens assembly (10) is arranged, along the optical axis (OA), between the first lens assembly (2) and the second lens assembly (3) such that the parallel beam (5) passes through the telescopic lens assembly (10). The telescopic lens assembly (10) is adapted such as to change, preferably decrease, a width (15', 15'') of the parallel beam (5) .

## Description

The present invention relates to an optical assembly, a microscope and a method of imaging a sample according to the preamble of the independent claims.

Microscope, comprising optical assemblies with lenses, used to image samples are known in the art.

US 8,163,661 discloses a luminescence measuring method which can produce a luminous intensity depending on the amount of a substance to be measured. US 8,163,661 further discloses a luminescence image pick-up unit which is constituted by an objective lens, a dichroic mirror, a CCD camera and an imaging lens.

A limitation in many imaging applications is the low intensity of the light which is collectable from the sample.

For example, in live-cell imaging, fluorescence and bioluminescence have been used as imaging modalities. However, bioluminescence is inherently of low intensity while the available intensity of fluorescent light may be limited by the sensitivity of the sample to excitation light.

However, known microscopes have severe limitations when imaging modalities with low signal intensity are used, in particular bioluminescence, because the intensity of the light available for image generation is not sufficient to generate high-quality images.

Certain specialized microscopes exist which achieve some compensation for the low intensities in such applications. However, these microscopes typically compensate for the low intensity by sacrificing field of view (FOV), spatial resolution, and dynamic range. Furthermore, signal-to-noise ratios (SNR) may be lower.

Thus, the object of the present invention is to overcome the drawbacks of the prior art, in particular to provide an optical assembly and a microscope which allows for the imaging of low signal intensity samples without prohibitively reducing FOV, spatial resolution and dynamic range and/or increasing SNR.

This and other objects are achieved by the optical assembly, the microscope and the method according to the characterizing portion of the independent claims.

The optical assembly according to the invention is particularly adapted for use in an imaging system, in particular in a microscope such as a bioluminescence microscope. It will be understood, however, that the optical assembly may also be used in alternative imaging systems including imaging systems providing demagnification. The optical assembly comprises a first lens assembly and a second lens assembly. The first lens assembly is adapted for collecting light emitted and/or reflected by a sample. For example, the first lens assembly may be an objective lens as known in the art. The light may be reflected or scattered light originating from a light source and directed onto the sample and then reflected by the sample. Preferably, however, the light collected is emitted by the sample, for example by bioluminescence, electroluminescence, chemiluminescence and/or photoluminescence (e.g. fluorescence). The second lens assembly is adapted for forming an image. The second lens assembly may be any image formation lens, e.g. a tube lens, as known in the art. The first and the second lens assembly define an optical axis, i.e. the axis along which light travels through the optical assembly in its intended use. The optical axis extends from the first lens assembly, where light is collected. The optical axis may also be a symmetry axis of the optical assembly. The first lens assembly is infinity corrected, i.e. light collected from a sample is formed into a parallel beam exiting the first lens assembly. Parallel beam may be understood, in this context, as rays of light which generally travel in substantially the same direction at a given point along the optical axis, also referred to as a collimated beam. However, it will be understood that the parallel beam does not necessarily need to extend along a straight line, but may be directed in different directions using optical elements such as mirrors. The second lens assembly is arranged with respect to the first lens assembly such that the parallel beam enters the second lens assembly. In general, the parallel beam may travel in a direction parallel to the optical axis when exiting the first lens assembly and may enter the second lens assembly in a direction parallel the optical axis. The optical assembly further comprises a telescopic lens assembly. The telescopic lens assembly is arranged, along the optical axis, between the first lens assembly and the second lens assembly. Thus, the parallel beam passes through the telescopic lens assembly. The telescopic lens assembly is adapted such as to change a width of the parallel beam. Preferably, the telescopic lens assembly is adapted to decrease the width of the parallel beam.

Any of the lens assemblies described herein may be formed by one or several optical lenses, such as a singlet or doublet lens. However, it will be understood that any of the lens assemblies described herein may be formed by curved mirrors, e.g. focusing mirrors.

The telescopic lens assembly may, in general, be configured such that a light ray, which enters the telescopic lens assembly in a direction parallel to the optical axis and in a first distance from the optical axis, exits the telescopic lens assembly in substantially the same direction but at a second distance from the optical axis which is different from the first distance. Therefore, the width of the parallel beam is changed because an outermost light ray which enters the telescopic lens assembly is directed through the telescopic lens assembly such that the outermost light ray is positioned at a different distance from the optical axis but travels in the same direction.

It will be understood, however, that the direction of travel of light within the telescopic lens assembly by change and, in particular, may result in the parallel beam being transformed into a non-parallel within the telescopic lens assembly. As such, the characteristics of the telescopic lens assembly as described here refer to the changes of light exiting the telescopic lens assembly compared to the light entering the telescopic lens assembly. It will be understood that any optical element or combination of optical elements which provides these characteristics may be suitable to be used as a telescopic lens assembly and that direction, width and other characteristics of a light beam may differ between the entry and the exit of the telescopic lens assembly.

The telescopic assembly therefore allows to tune the width of light beam entering the second lens assembly. As a result, the signal intensity may be increased because more light, from a given point of a sample, may be used to form an image when the telescopic lens assembly is configured to reduce the width of the parallel beam. Thus, the SNR may be increased.

Furthermore, many commercially available image formation lenses have a back aperture through which the parallel beam enters said image formation lens. A parallel beam formed by a light collection lens may not have a width matching the back aperture width of the image formation lens. Often, the back aperture width is smaller than the width of the parallel beam. Some light collection lenses, such as microscope objectives, may also have an aperture which influences or determines the size of the parallel beam but may have a different size than the aperture of the image formation lens. In addition, the image formation lens may also not have the same size as the objective lens, and in particular may be smaller. Thus, a portion of the light collected from the sample may be lost. By using a telescopic lens assembly as disclosed herein, the width of the parallel beam may be tuned to match the width of such the aperture of the image formation lens. This may result in higher FOV, in particular when the width is decreased.

In addition, the telescopic lens assembly may create more space between the first lens assembly (such as an objective lens) and the second lens assembly (such as a tube lens) and thus enable other modalities such as phase contrast or differential interference contrast imaging. These modalities require further optical elements to be present. However, in conventional microscope setups, there may not be sufficient space to arrange them. With the optical assembly according to the invention, such elements may be present because the telescopic lens assembly may provide more usable space along the optical axis.

At least one of the first and second lens assemblies may be a microscope objective, preferably one of an oil-immersion, water immersion, and air microscope objectives.

Both the first and the second lens assemblies may be infinity corrected.

The first and/or the second lens assembly may comprise or consist of at least one focusing mirror.

Microscope objectives suitable to be used as first and/or second lens assembly are known in the art and commercially available. As such, using microscope objectives is a particularly easy way to provide a suitable lens assembly.

For example, a variety of suitable microscope objectives were disclosed in Advanced Optical Technologies, 2019; (8(5): 313-347 (DOI: 10.1515/aot-2019-0002), which is incorporated herein by reference.

In a particularly preferred embodiment, both the first and the second lens assembly are each formed by a microscope objective. It will be understood that the first and the second lens assembly, when both formed by microscope objectives, do not need to have the same characteristics or parameters and in particular need not have the same magnification number.

For example, the first lens assembly may be formed by the commercially available 40X oil-immersion objective "UPlanXApo 40X oil" (Olympus, LXAPO40XO).

Additionally or alternatively, the second lens assembly may be formed by a commercially available 20X air objective "LUCPlanFL N 20X" (Olympus, LUCPLFLN20X).

It will be understood that the microscope objective, when used as a first lens assembly for light collection, may have to be oriented in a direction opposite compared to when a microscope is used as a second lens assembly. Thus, a first microscope objective (used as first lens assembly) may be oriented such that light is collected and transformed into a parallel beam when exiting the microscope objective. A second microscope objective (used a second lens assembly) may then be arranged at an angle of 180°, with respect to the first microscope objective, such that the parallel beam enters the second microscope objective (on a side corresponding to the exit side of the first microscope objective) and is formed into an image.

The telescopic lens assembly may comprise at least a first lens and a second lens. The telescopic lens assembly may also comprise at least a first and a second plurality of lenses. Preferably, the first and/or the second lens (and/or plurality of lenses) is a focusing lens (and/or plurality of lenses). Further preferably, the first lens (and/or plurality of lenses) may have a greater focal length than the second lens.

Preferably, the first lens (and/or plurality of lenses) has a first focal point and the second lens (and/or plurality of lenses) has a second focal point, and the first and the second lens (and/or plurality of lenses) may be arranged (e.g. placed and oriented, in particular with respect to the light path and/or other optical elements) with respect to one another such that the first and the second focal point substantially coincide.

The telescopic lens assembly may comprise or consist of at least one focusing mirror. In particular, the first lens and/or the second lens may be a focusing mirror.

In a particularly preferred embodiment, at least one of the first and the second lenses is a focusing lens, and the respective other lens is a focusing lens or a diverging lens.

In a particularly preferred embodiment, the telescopic lens assembly has exactly one first lens (or plurality of lenses) and exactly one second lens (or plurality of lenses) each of which has a focusing point.

Particularly preferably, the first and second lenses are arranged such that their focal points coincide. To this end, the distance between the first and the second focusing lenses may be the sum of the focal lengths of the first and second lens, in particular when both the first and the second lenses are focusing lenses.

It also conceivable, however, that at least one of the first and second lenses is a diverging lens. When the telescopic lens assembly comprises a first and/or second lens is a diverging lens and the respective other lens is a focusing lens, the focal points may coincide. In this case, the distance between the first and second lens corresponds to the difference of the (positive) focal lengths of the first and second lens. The focal point is then located, along an optical axis, outside of the area between the first and second lenses and on the side of the diverging lens.

Using a first and a second lens in the telescopic lens assembly allows to decrease or increase the width of the parallel beam, depending on the direction of the light path along the telescopic lens assembly. For example, if the first and the second lenses are both lenses with different focal lengths, but with coinciding focal points, the width of the parallel beam may be greater on the side of a telescopic lens assembly where the lens with a greater focal length is located, and smaller on the side where the lens with the smaller focal length is located. Thus, if the parallel beam enters the telescopic lens assembly on the side of the telescopic lens assembly where a focusing lens with a greater focal length is arranged, the width of the exiting parallel beam is decreased.

If the parallel beam enters the telescopic lens assembly on the side of the telescopic lens assembly where a focusing lens with a smaller focal length is arranged, the width of the exiting parallel beam is increased.

The first and second lens may further be arranged in parallel to one another and/or substantially centered with respect to the optical axis.

The first and/or second lens may, for example, be formed by a biconvex lens, a plano-convex lens, or a positive meniscus lens when said lens is configured as a focusing lens.

The first and/or second lens may, for example, be formed by a biconcave lens, a plano-concave lens, or a negative meniscus lens when said lens is configured as a diverging lens.

Particularly preferably, the first lens and/or the second focusing lens are achromatic lenses.

Particularly suitable examples of commercially available lenses, which may be used in a telescopic lens assembly, are e.g. the Thorlabs models "AC254-045-A-ML" (achromatic, 45 mm focal length) and "AC254-035-A-ML" (achromatic, 35 mm focal length).

Preferably, the first focusing lens is arranged closer to the first lens assembly than the second focusing lens.

Therefore, when the first and second focusing lenses are arranged such that their focal points coincide, the parallel beam coming from the first lens assembly enters the first focusing lens and is focused onto the focal point of the first focusing lens. Because the focal point of the first focusing lens is also the focal point of the second focusing lens, the light enters the second focusing lens and is formed into a parallel beam again. However, because the focal lengths of the first and second focusing lenses are not identical, the width of the parallel beam is changed.

If the second focusing lens has a shorter focal length than first focusing lens, the width of the exiting parallel beam is smaller.

If the second focusing lens has a greater focal length than first focusing lens, the width of the exiting parallel beam is larger.

The parallel beam exiting the second focusing lens may then be directed into the second lens assembly such as to form an image.

The telescopic lens assembly may be adapted such that the width of the parallel beam exiting the telescopic lens assembly coincides with, or is smaller than, a size of an aperture of the second lens assembly.

Therefore, the signal intensity usable for image formation is maximized because all of the light collected by the first lens assembly is directed into the second lens assembly.

Preferably, the optical assembly further comprises at least one further optical element, preferably at least one of an emission filter, a beam splitter, a wave plate, a phase plate, a prism, a condenser, a depolarizer, a grating, a holographic element, a dichroic, a phase stop, and a polarization filter, particularly preferably arranged along the optical axis between the first and second lens assembly or between the first and the second lens. The emission filter may be one of a band pass filter, short pass filter, and long pass filter.

Additionally or alternatively, a light source may be included in the optical assembly providing light which is directed or directable toward the first and/or second lens assembly long the optical axis. The light source may also be arranged such as to transmit light through the sample into the first lens assembly (i.e. in a transmission setup). A condenser may be arranged, along the optical axis, between the light source and the sample.

This allows for further imaging modalities to be used with the optical assembly. For example, a light source and a beam splitter (wherein the beam splitter directs a portion of the light, typically with lower wavelengths, toward the sample) enable epifluorescence measurements which are not accessible with microscope setups known in the art.

Differential interference contrast imaging may be possible using the optical assembly. To this end, a light source and a condenser may be used to create a transmission setup as described above. The optical assembly may comprise at least a first polarizer and a first prism arranged along the optical axis between the light source and the condenser. The first polarizer may be arranged closer to the light source and the first prism closer to the condenser. A second prism and a second polarizer may be arranged in the telescopic lens assembly and/or between the first and second lens assemblies. Preferably, the second prism and a second polarizer are between the first lens and the second lens (or plurality of lenses). The second prism may be arranged closer to the first lens and the second lens may be arranged closer to the second lens (or plurality of lenses.

Phase contrast imaging may be possible using the optical assembly. To this end, a light source and a condenser may be used in a transmission setup as described above. In addition, a phase stop may be arranged, along the optical axis, between the light source and the condenser. Furthermore, a phase plate may be arranged between the first and the second lens assemblies, preferably in the telescopic lens assembly (e.g. between the first and the second lens of the telescopic lens assembly).

The microscope according to the invention comprises an optical assembly as described herein and a detector. The detector may be a camera. The detector is arranged, along the optical axis, after the optical axis, after the second lens assembly such as to detect an image formed by the second lens assembly.

Preferably, the second lens assembly is the last optic before the detector, i.e. no other optical elements are arranged between the detector and the second lens assembly.

Suitable microscope cameras were disclosed in Microscopy Today, 25, 5 (September 2017): 24-29 (DOI: 10.1017/S155192951700061X), which is incorporated herein by reference.

The optical assembly arranged between the first and second lens assembly further allows to adjust the size of the image formed by the second lens assembly to match the size of the detector. In general, this provides for an optimal SNR and FOV.

Furthermore, the microscope allows to use inherently low signal intensity sources to form images. For example, sample may be imaged using modalities such as bioluminescence, chemiluminescence or electroluminescence and in particular without the use of an additional light source. Because the telescopic lens assembly changes the width of the parallel beam to match the width of an accessible area of the second lens assembly, substantially all the light emitted from the sample may be used for image formation. As a result, the total signal intensity and the SNR may be higher, while the FOV may be retained.

Preferably, the detector has a pixel size of less than 5 µm. The pixel size may also be less than 2.5 µm or particularly preferably less than 1.5 µm. Particularly preferably, the detector is a scientific complementary metal-oxide semiconductor (sCMOS) chip.

In general, CMOS-based detectors have smaller pixel sizes than CCDs known in the art. As such, CMOS cameras may be particularly advantageous for the microscope. Other suitable detectors include single-photon avalanche diode arrays (SPADs).

By shrinking the pixel size and increasing conversion gain, a lower read noise may be achieved and permitting single-photon detection. However, such a small pixel size also lead to a small chip size and a low total photon count.

These effects may be counteracted by the telescopic lens assembly, which is therefore particularly advantageous in combination with a small pixel-size detector.

The telescopic lens assembly may decrease the width of the parallel beam entering the second lens assembly (e.g. a tube lens) such that no light is lost due to a mismatch of the size of a back aperture on the tube lens and the width of the parallel beam. Furthermore, as a result, the formed image may match the size of the chip more closely and increase the total photon count and photons per pixel. The microscope according to the invention may therefore provide a higher FOV, higher spatial resolution, and higher sensitivity compared to microscopes which use alternative cameras and/or no telescopic lens assembly.

An example of a commercially available, sCMOS-based camera with a small pixel size of approximately 1.1 µm is the Quanta Image Sensor QIS16TS camera by Gigajot Technology Inc. (Pasadena, CA, United States).

Further embodiments of photodetectors, referred to as Quanta Image Sensors, are disclosed in EP 3 430 648, which is incorporated herein by reference.

Preferably, the detector may have a detection area with a size of less than 50 mm², preferably less than 40 mm², particularly preferably less than 30 mm².

A detection area may be understood as the surface area in which photons may be detected.

The microscope may further comprise a light source and a beam splitter. The beam splitter may be arranged along the optical axis such that the parallel beam is directed through the beam splitter. Additionally or alternatively, the beam splitter may be arranged and/or configured such that a light beam from the light source is directable into the first lens assembly by the beam splitter.

In a particularly preferred embodiment, the beam splitter is arranged between the first and second lens assembly, with respect to the optical axis. A portion of the light from the light source, in particular a portion having a lower wavelength than a remaining portion, may be reflectable or reflected by the beam splitter and guided into the first lens assembly such as to illuminate a sample. The beam splitter may further be adapted such that light emitted or reflected from the sample passes through the beam splitter, substantially without interaction, and thus enters the second lens assembly. Such a setup allows for epifluorescence imaging.

Additionally or alternatively, an emission filter may be used, e.g. to prevent reflection from the portion of light to enter the second lens assembly.

The method according to the invention is for imaging a sample. Preferably, the method is performed using a microscope as described herein. The method comprises arranging a telescopic lens assembly between a first lens assembly and a second lens assembly. The first lens assembly is adapted for light collection and the second lens assembly is adapted for image formation. The first and the second lens assembly define an optical axis. A sample is placed with respect to the first and second lens assembly such that light emitted from the sample is collected by the first lens assembly and formed into a parallel beam by the first lens assembly. The parallel beam passes through the telescopic lens assembly. The telescopic lens assembly is configured to change a width of the parallel beam. Preferably, the width of the parallel beam is decreased by the telescopic lens assembly. The light is directed into the second lens assembly such that an image is formed by the second lens assembly. The image formed by the light is detected using a detector.

It will be understood that every feature of the optical assembly as described herein may be used in the method according to the invention in order to provide the advantages mentioned above.

The sample may comprise or consist of at least one of live cells, live tissue, and/or other light sensitive material. For example, light-responsive and/or light-sensitive materials may be materials which degrade or otherwise change their properties when exposed to light. This may include nanoparticles (such as quantum dots), organic matter other than cells (such as proteins), molecules, atoms, semiconductors and structures such as LEDs, lasers, and optical devices.

Preferably, the light emitted from the sample is at least partially generated by the sample, for example by bioluminescence, electroluminescence, chemiluminescence, and/or radioluminescence. Light generated by the sample may include any light which is not reflected by the sample.

Thus, illumination of the sample, and as a consequence sample degradation, may be reduced or avoided.

Preferably, no light source is used to illuminate the sample, i.e. the light collected for image acquisition is emitted by the sample, for example by bioluminescence, electroluminescence, chemiluminescence, and/or radioluminescence.

Preferably, the sample is manipulated such as to emit light. For example, a voltage may be applied and/or a chemical substance, in particular a chemiluminescent molecule may be added to the sample, which may cause light generation due to electroluminescence and chemiluminescence, respectively. Additionally or alternatively, the sample may be manipulated to express a protein and/or a bioluminescent enzyme. For example, nanoluciferase may catalyze luminescence in the presence of certain molecules. The manipulation does particularly preferably not involve exposure to electromagnetic radiation.

In the following, the invention is described in detail with reference to the following figures, showing:
- Fig. 1:: schematically two microscope objective lenses configured as first and second lens assemblies.
- Fig. 2:: a schematic view of a first optical assembly according to the invention.
- Fig. 3a-3b:: a schematic view of two variants of a second optical assembly according to the invention.
- Fig. 4a-4d:: schematically different variants of telescopic lens assemblies.
- Fig. 5:: a lens suitable for a telescopic lens assembly.
- Fig. 6:: schematically a microscope according to the invention.
- Fig. 7a-7b:: comparison of the spatial resolution of a microscope according to the invention with the state of the art.
- Fig. 8a-8b:: comparison of the field of view (FOV) of a microscope according to the invention with the state of the art.

Fig. 9a-9b: further embodiments of microscopes.

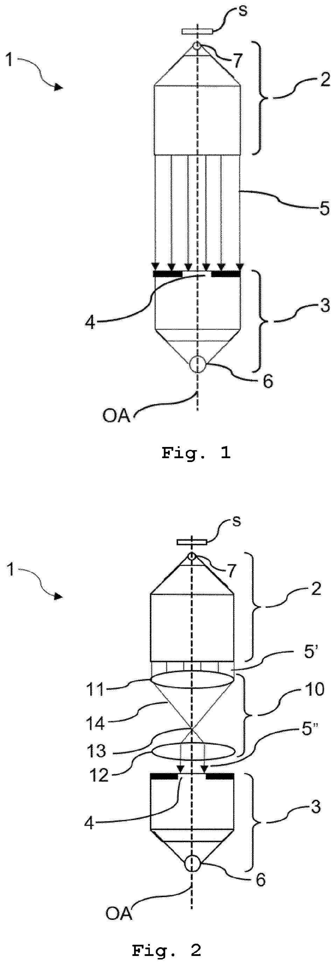

Fig. 1 shows schematically an optical assembly 1 as known in the art and not comprising a telescopic lens assembly (see Fig. 2). The optical assembly 1 comprises a microscope objective 2 which is used, as shown here, to collect light, e.g. emitted light, of a sample S. The light enters the objective through entry point 7 and is converted into a parallel beam 5 exiting the objective lens 2. A second microscope objective 3 is arranged with respect to the objective lens 2, aligned along the optical axis OA but rotated by 180° so as to function as a tube lens for image formation. Accordingly, the parallel beam 5 enters the microscope objective 3 and is formed into an image exiting via point 6, which substantially corresponds to entry point 7 of the objective 2. The microscope objective 3 has a back aperture 4 which limits the amount of light entering the microscope objective 3. Thus, light of the parallel beam 5 which arrives at the microscope objective 3 but outside of the back aperture 4 is lost and cannot be used for image formation.

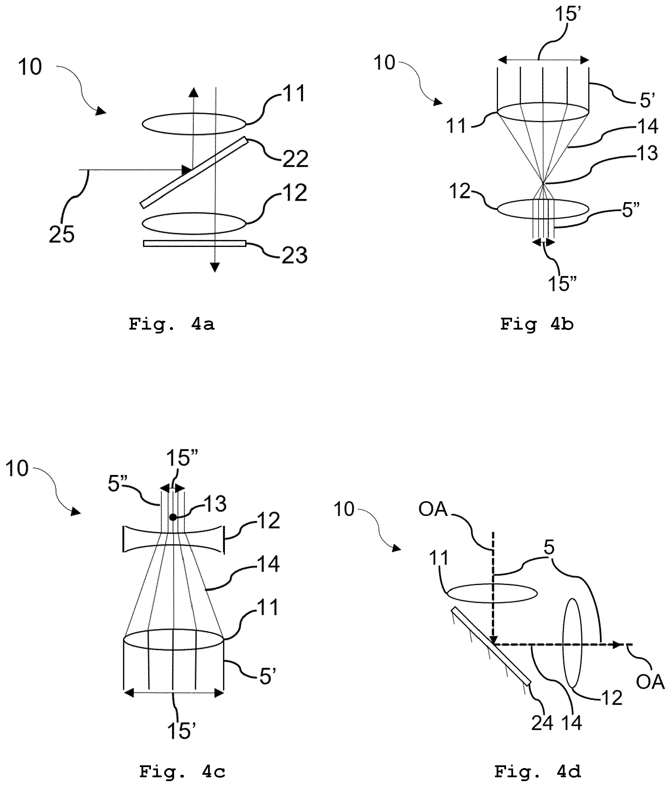

Fig. 2 shows an optical assembly 1 according to the invention. The first lens assembly 2 and the second lens assembly 3 are both infinity-corrected microscope objectives and substantially correspond to Fig. 1. For conciseness, similar features will not be described twice. Here, a telescopic lens assembly 10 is arranged between the first lens assembly 2 and the second lens assembly 3. The telescopic lens assembly shown here comprises a first lens 11 and a second lens 12 whose optical axis coincides with the optical axis OA of the optical assembly 1. The parallel beam 5' exits the first lens assembly 2 and enters the telescopic lens assembly 10, here through the first lens 11. The first lens 11 is a focusing lens. Therefore, the parallel beam 5', after passing the first lens 11 forms into non-parallel beam 14 which converges toward a focal point 13, where it crosses and then diverges again after. The non-parallel beam 14 then enters the second lens 12, which is also a focusing lens. The focal length is shorter than the focal length of the first lens 11, but the first lens 11 and the second lens 12 are positioned such that their focal points 13 substantially coincide. As a result, the non-parallel beam is formed into a parallel beam 5" after passing through second lens 12. The width of the parallel beam 5" (see Figs. 4b and 4c) has decreased compared to parallel beam 5' because the focal length of the second lens 12 is shorter, i.e. the diverging portion of the non-parallel beam 14 travelled a shorter distance after the focal spot 13 before being formed into a parallel beam 5" (compared to the distance converging portion of the non-parallel beam 14 travelled from the first lens 11 to the focal point 13). Because of the reduction in beam width, the parallel beam 5" matches the back aperture 4 in size and all of the light of the parallel beam 5" may be used for image formation.

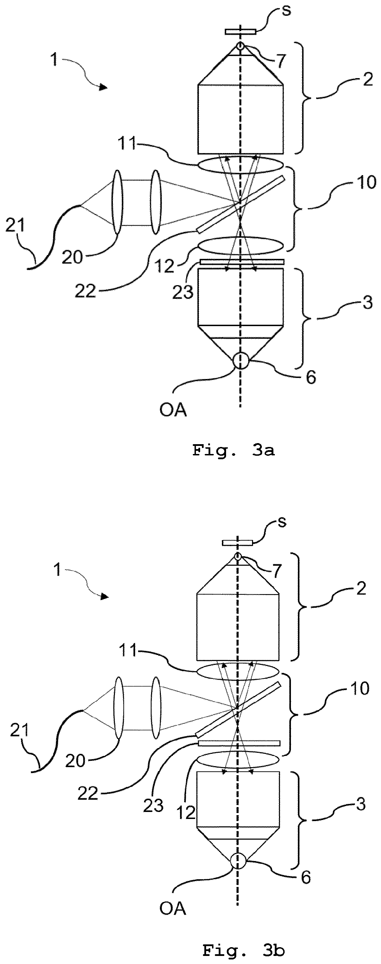

Fig. 3a shows an optical assembly 1 which is similar to the optical assembly of Fig. 2. For clarity and conciseness, identical elements will not be described again. Here, the optical assembly 1 is configured for epifluorescence measurements. To this end, the optical assembly further comprises a light source 20 with an optical fiber 21 through which light is delivered to the light source 20. It would also be possible to use other light sources, such an LED. A beam splitter 22, here a 90:10 white light beam splitter, is arranged between the first lens 11 and the second lens 12. A dichroic (not shown) may be used instead of a beam splitter. The light from the light source enters the beam splitter 22 and is partially (10%) reflected toward the first lens 11 and the microscope objective 2. The reflected light is thus directed through the first lens assembly 2 toward the sample S. The sample S may be excited by the incoming light and emits fluorescent light. The fluorescent light passes through the optical assembly 1 substantially as shown in Fig. 2 and without substantially interacting with the beam splitter (90% of the light being transmitted, or more than 90% when a dichroic is used). However, an emission filter 23 may be arranged along the optical axis OA, as shown here between the second lens 12 and the microscope objective 3. The emission filter may filter certain wavelength ranges which are not of interest for a given measurement, for example to reject excitation laser light (e.g. filtering light below 500 nm).

Fig. 3b shows an optical assembly 1 which is substantially similar to the optical assembly of Fig. 3a. Here, the emission filter 23 is arranged within the telescopic lens assembly, i.e. between the first lens 11 and the second lens 12.

Fig. 4a shows a telescopic lens assembly 10 comprising a first focusing lens 11 and a second focusing lens 12. Here, for clarity, the beam path of the light is not shown (see Figs. 4b and 4c). However, the direction of light 25 coming from a light source (see Fig. 3a). The telescopic lens assembly 10 shown here substantially corresponds to the one shown in Fig. 3a and comprises a beam splitter 22 and an emissions filter. As described above, light 25 comes in and is reflected toward the first lens 11 by the beam splitter 22. Light coming from the sample (which may be any type of light reflected or generated by the sample) then travels back through the telescopic lens assembly substantially without interacting. However, certain wavelengths may be filtered by the emission filter 23, for example for filtering rejected laser light if the emission filter is a longpass filter. Additionally or alternatively to the emission filter 23, a polarization filter, a phase plate, a prism, and/or a wave plate may be used.

Figs. 4b and 4c show two variants of telescopic lens assemblies 10. Here, no additional optical elements such as beam splitters, filters, etc. are shown, but it will be understood that any additional element as described herein may be used. It will also be understood that these exemplary embodiments of telescopic lens assemblies are compatible with any optical assembly or microscope disclosed herein.

Fig. 4b shows a telescopic lens assembly 10 having a first focusing lens 11 and a second focusing lens 12. Both focusing lenses 11, 12 have a focal point at a focal length from a lens plane. Here, the first focusing lens 11 is positioned orthogonally to the optical axis and in parallel to the second focusing lens 12, wherein the distance between the first lens 11 and the second lens 12 the sum of the focal length of both lenses. The focal point 13 is therefore the focal point of both the first lens 11 and the second lens 12. A parallel beam 5' has a first width 15" and enters the telescopic lens assembly 10 through the first focusing lens 11. The first focusing lens 11 forms a converging/diverging beam 14, said beam 14 being convergent toward the focal point, which is at a distance corresponding to the focal length of the first focusing lens 11. After passing through the focal point 13, the beam 14 diverges and travels toward the second focusing lens 12. Because the focal point 13 is also the focal point of the second lens 12, the divergent portion of beam 14 is formed into parallel beam 5" by the second focusing lens 12. The focal length of the second focusing lens 12 is smaller than the focal length of the first focusing lens, i.e. focal point 13 is closer to the second lens 12 than the first lens 11. Therefore, the divergent portion of the beam 14 travels a shorter distance before reaching the second focusing lens 12 which also reduces the radial extension of beam 14 where it reaches lens 12. As a result, a second width 15" of the parallel beam 5" is smaller than the first width 15'. It will be understood that a parallel beam may also be directed into the second focusing lens 12 and toward the first focusing lens 11 in applications where an increase in width of the parallel beam 5', 5" is desired. In practice, the telescopic lens assembly 10 may therefore be used in either direction relative to the direction of the incoming light.

Fig. 4c shows an alternative embodiment of a telescopic lens assembly 10. Here, the second lens 12 is a diverging lens. Diverging lenses have a negative focal length. The first lens 11 is a focusing lens with a focal length which is longer than the absolute value of the focal length of the second lens 12. A distance between the first lens 11 and the second lens 12 corresponds to a difference the (absolute values) of the focal lengths of the first lens 11 and the second lens 12. The second lens is thus also positioned such that its focal point coincides with focal point 13 of the first lens. The focal point is positioned behind the second lens 12, relative to the direction of travel of the light. Therefore, parallel beam 5' entering the first lens 11 is focused into a beam but reaches the second lens 12 before reaching the focal point 13. Because the cone-shaped beam 14 points toward the focal point of the second lens 11, beam 14 is formed into a parallel beam 5". A first width 15' of the parallel beam 5' is larger than a second width of the second beam 15".

Fig. 4d shows a further embodiment of a telescopic lens assembly 10. A first lens 11 and a second lens 12 are arranged at an angle to one another, and a mirror 24 is used to redirect beam 14 coming from the first lens 11 toward the second lens. Functionally, the shown telescopic lens assembly also increases or decreases the width of a parallel beam 5 and may thus be used in any of the optical assemblies shown herein. However, the angular arrangement and the use of mirror 24 may facilitate the arrangement if space constraints arise and a longitudinal arrangement is not practical. The optical axis OA follows the same angle as the optical axis represents the symmetry of the optical system. Optionally, the mirror may be partially transparent, e.g. transparent in one direction and/or for certain wavelength, such as to transmit light from an external source.

It will be understood that the mirror 24 may also be placed between the first lens assembly (see Fig. 2) and the first lens 11, or between the second lens 12 and the second lens assembly (see Fig. 2).

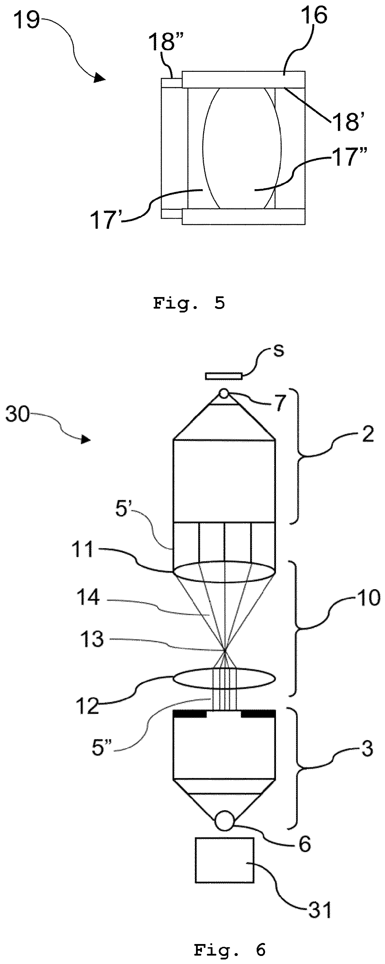

Fig. 5 shows a lens 19 which may be used as a first lens 11 and/or second lens 12 in a telescopic lens assembly as described herein. The lens 19 shown here is a doublet lens with first and second lens elements 17', 17''. Lens elements 17, 17" are mounted in a lens mount 16 made of aluminum which has an external thread 18'' on one end and an internal thread on the other end 18'. The lens 19 has a focal length of 35 mm, but it will be understood that similar lenses may be configured to have smaller or larger focal lengths, for example 45 mm. The lens 19 is made of optical glass and has a center thickness of 14 mm and a diameter of 25 mm.

Fig. 6 shows a microscope 30 according to the invention. The microscope 30 shown here comprises an optical assembly as shown in Fig. 2, but it will be understood that any other optical assembly disclosed herein may be used as well. Furthermore, the microscope comprises a microscope camera 31. The camera 31 is positioned such as to detect an image formed by second lens assembly 3. The camera is based on a sCMOS and configured as a photon counting, temperature stabilized Quanta Image Sensor and has a pixel size of 1.1 µm, a maximum frame rate of 15974 frames per second, a read noise of 0.19 electrons (at 10°C), and a dynamic range of 80 dB.

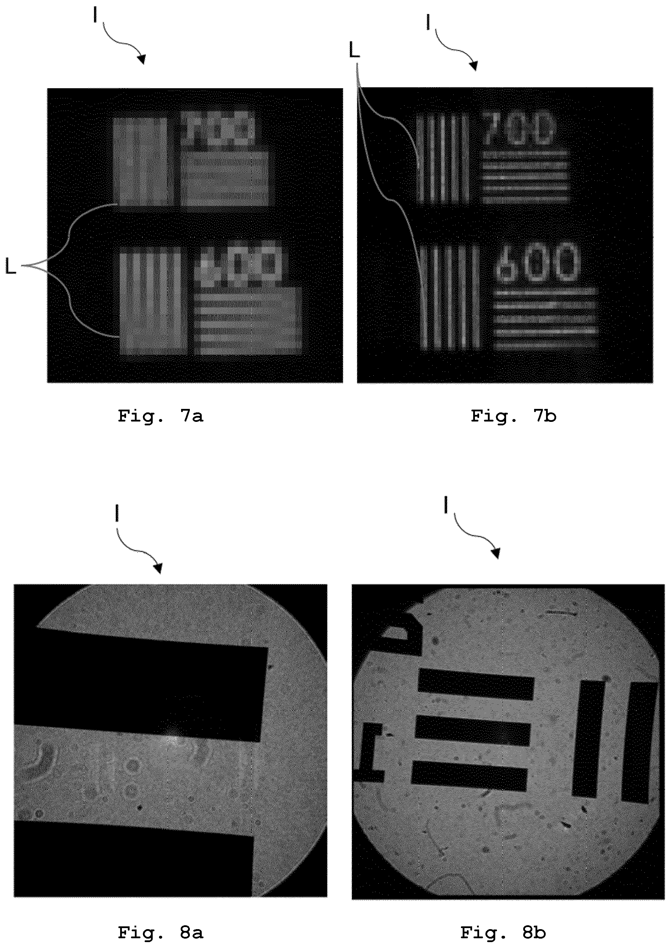

Fig. 7a shows an image I of a a resolution test target as a sample S, imaged at 600 and 700 parallel lines L per mm, taken on a microscope known in the art.

By comparison, Fig. 7b shows an image I of the same sample S taken with the microscope as shown in Fig. 6. The higher spatial resolution renders the lines L clearly discernible in Fig. 7b, whereas they are not resolved in Fig. 7a.

Fig. 8a shows an image I of a sample S taken by a state of the art microscope having a FOV of 514 um.

By comparison, as shown in Fig. 8b, an image I of the same sample S taken with the microscope as shown in Fig. 6 gives a FOV 1835 um, respectively.

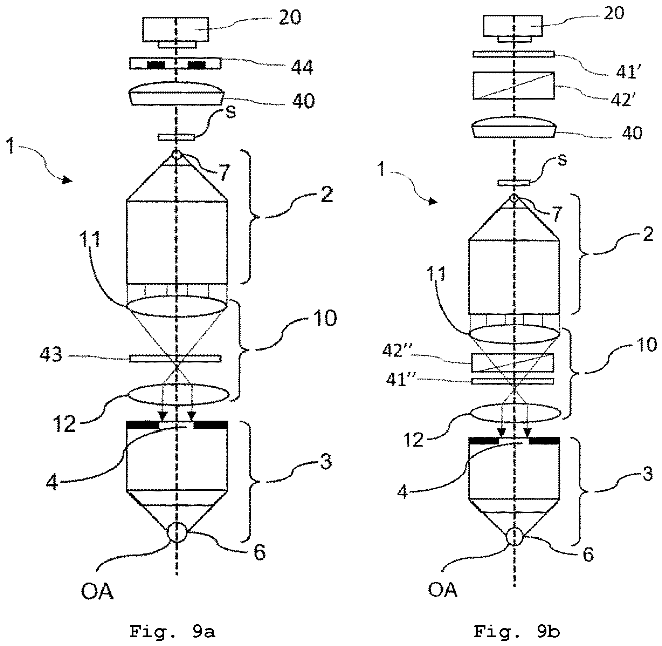

Fig. 9a shows a further embodiment of an optical assembly 1 according to the invention. The optical assembly 1 is based on the assembly shown in Fig. 2 and is particularly suitable for a microscope adapted for phase contrast imaging. The optical assembly 1 is combined with a light source 20, here in the form of an LED, which illuminates the sample S. A condenser 40 is arranged with respect to the light source, and a phase stop 44 is arranged between the light source 20 and the condenser. The light travels through the phase stop 44 and the condenser 40 before reaching the sample. A phase plate 43 is arranged between the first lens 11 and the second lens 12 of the telescopic lens assembly 10.

Fig. 9b shows a further embodiment of an optical assembly 1 according to the invention. The optical assembly 1 is based on the assembly shown in Fig. 2 and is particularly suitable for a microscope adapted for differential interference contrast imaging. The optical assembly 1, as shown here, is used in combination with a transmission setup similar to the one shown in Fig. 9a. Here, the light source 20 and the condenser 40 are used to illuminate the sample S. Furthermore, a first polarizer 41' and a first prism 42' are arranged between the light source 20 and the condenser, wherein the first polarizer 41' is closer to the light source 20 and the first prism 42' is closer to the condenser 40. A second prism 42" and a second polarizer 41" are arranged within the telescopic lens assembly 10, i.e. between the first lens 11 and the second lens 12. The second polarizer 41" is arranged closer to the second lens 12 and the second prism 41" is closer to the first lens 11.

## Claims

1. An optical assembly (1) for use in a imaging system, preferably a microscope (30), comprising a first lens assembly (2) and a second lens assembly (3), wherein the first lens assembly (2) is adapted for collecting light of a sample (S) and wherein the second lens assembly (3) is adapted for forming an image (I), wherein the first lens assembly (2) and the second lens assembly (3) define an optical axis (OA),
wherein the first lens assembly (2) is infinity corrected, such that light collected from a sample (S) is formed into a parallel beam (5) exiting the first lens assembly (2), further wherein
the second lens assembly (3) is arranged with respect to the first lens assembly (2) such that the parallel beam (5) enters the second lens assembly (3),
**characterized in that**
the optical assembly (1) further comprises a telescopic lens assembly (10), and wherein the telescopic lens assembly (10) is arranged, along the optical axis (OA), between the first lens assembly (2) and the second lens assembly (3) such that the parallel beam (5) passes through the telescopic lens assembly (10), and wherein the telescopic lens assembly (10) is adapted such as to change, preferably decrease, a width (15', 15") of the parallel beam (5).

2. The optical assembly (1) according to claim 1, wherein at least one of the first and the second lens assemblies (2, 3) is a microscope objective, preferably an oil-immersion or air microscope objective.

3. The optical assembly (1) according to any one of claims 1 or 2, wherein the telescopic lens assembly (10) comprises at least a first lens (11) and a second lens (12), preferably wherein the first lens (11) and the second lens (12) are arranged with respect to each other such that a focal point (13) of the first lens (11) coincides with a focal point (13) of the second lens (12), and further wherein the first lens (11) has a greater focal length than the second lens (12).

4. The optical assembly (1) according to claim 3, wherein the first focusing lens is arranged closer to the first lens (11) assembly (2) than the second focusing lens.

5. The optical assembly (1) according to any one of the preceding claims, wherein the telescopic lens assembly (10) is adapted such the width (15', 15") of the parallel beam (5) exiting the telescoping lens assembly coincides with a size of an aperture of the second lens assembly (3).

6. The optical assembly (1) according to any one of the preceding claims, further comprising at least one further optical element, preferably at least one of an emission filter (23), in particular one of a band pass filter, short pass filter, and long pass filter, a beam splitter (22), a light source (20, 21), a polarization filter (41', 41''), a mirror (24), a condenser (40), a wave plate, a phase plate (43), a depolarizer, a grating, a holographic element, a dichroic, a phase stop, and a prism (42', 42").

7. A microscope comprising an optical assembly (1) according to any one of the preceding claims, and further comprising a detector (31), preferably a camera, wherein the detector (31) is arranged, along the optical axis (OA), after the second lens assembly (3) such as to detect an image (I) formed by the second lens assembly (3).

8. The microscope according to claim 7, wherein the detector (31) has a pixel size of less than 5 µm, preferably less than 2.5 µm, particularly preferably less than 1.5 µm.

9. The microscope according to any one of claims 7 or 8, wherein the detector (31) has a detection area with a size of less than 50 mm², preferably less than 40 mm², particularly preferably less than 30 mm².

10. The microscope according to any one of claims 7 to 9, further comprising a light source (20, 21) and a beam splitter (22), preferably wherein the beam splitter (22) is arranged along the optical axis (OA) such that the parallel beam (5) is directed through the beam splitter (22) and/or wherein a light beam (25) from the light source (20, 21) is directable into the first lens assembly (2) by the beam splitter (22) .

11. A method of imaging a sample (S), preferably using a microscope according to claims 7 to 10, comprising arranging a telescopic lens assembly (10) between a first lens assembly (2) and a second lens assembly (3), wherein the first lens assembly (2) is adapted for light collection and the second lens assembly (3) is adapted for image formation, wherein the first and second lens assemblies (2, 3) define an optical axis (OA),
placing a sample (S) to be imaged, with respect to the first lens assembly (2), such that light emitted from the sample (S) is collected by the first lens assembly (2) and formed into a parallel beam (5),
said parallel beam (5) passing through the telescopic lens assembly (10), wherein the telescopic lens assembly (10) is configured to change, preferably decrease, a width (15', 15") of the parallel beam (5),
wherein the light is directed into the second lens assembly (3) such as to form an image (I),
detecting the image (I) formed by the light using a detector.

12. The method according to claim 11, wherein the sample (S) comprises or consists of at least one of live cells, live tissue, and a light-responsive and/or light-sensitive material.

13. The method according to any one of claims 11 or 12, wherein the light emitted from the sample (S) is at least partially generated by the sample (S), preferably by at least one of bioluminescence, electroluminescence, and chemiluminescence.

14. The method according to any one of claims 11 to 13, wherein no light source is used to illuminate the sample (S).

15. The method according to any one of claims 11 to 14, wherein the sample (S) is manipulated such as to emit light, preferably by application of a voltage, addition of a chemical substance, in particular a chemiluminescent molecule, and/or expression of a bioluminescent enzyme, particularly preferably wherein the manipulation does not involve exposure to electromagnetic radiation.
